(19) Europäisches Patentamt
European Patent Office
Office européen des brevets

(11) **EP 4 450 149 A2**

(12) **EUROPEAN PATENT APPLICATION**

(43) Date of publication:
**23.10.2024 Bulletin 2024/43**

(21) Application number: **24179265.4**

(22) Date of filing: **15.09.2022**

(51) International Patent Classification (IPC):
**B01D 61/14** (2006.01)

(52) Cooperative Patent Classification (CPC):
**B01D 69/02; B01D 67/0027; B01D 67/0088;
B01D 69/12; B01D 69/1216; B01D 71/262;**
B01D 2325/02833; B01D 2325/04; B01D 2325/22

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2021 US 202163246093 P
18.05.2022 US 202263343347 P**

(62) Document number(s) of the earlier application(s) in
accordance with Art. 76 EPC:
**22870700.6 / 4 387 760**

(71) Applicants:
• **Celgard, LLC
Charlotte, NC 28273 (US)**
• **Entegris, Inc.
Billerica MA 01821-4600 (US)**

(72) Inventors:
• **WHITE, Eric R
Fort Mill, 29708 (US)**
• **BONYADI, Sina
Billerica, 01821 (US)**
• **KALYANI, Vinay
Salem, 03079 (US)**

(74) Representative: **Greaves Brewster LLP
Copa House
Station Road
Cheddar, Somerset BS27 3AH (GB)**

Remarks:
This application was filed on 31-05-2024 as a
divisional application to the application mentioned
under INID code 62.

(54) **DRY-PROCESS MEMBRANE FOR FILTRATION**

(57) A dry-process microporous membrane for filtration, wherein at least one layer of the membrane has an average pore size less than 0.035 microns, preferably between about 0.010 microns to about 0.020 microns, and a thickness less than 14 microns. The membrane may be used in an ultra-filtration or nano-filtration process. The membrane exhibits high dimensional stability.

EP 4 450 149 A2

**Description**

FIELD

This application is directed to dry-process membranes suitable for use in filtration processes. Such processes may involve ultrafiltration or nano-filtration.

BACKGROUND

A major application of filter membranes is to remove unwanted materials from a flow of a useful fluid. Many gaseous and liquid fluids in industry are processed using filters, including environmental air, drinking water, fuels, liquid industrial solvents and processing fluids, industrial gases used for manufacturing or processing, and liquids that have medical or pharmaceutical uses. Unwanted materials that are removed from fluids include impurities and contaminants such as particles, microorganisms, and dissolved chemical species. Specific examples of impurity removal applications for filter membranes include their use to remove particles or bacteria from therapeutic solutions in the pharmaceutical industry, to process ultrapure aqueous and organic solvent solutions for use in microelectronics processing, and for air and water purification processes. Nano-filtration and/or ultra-filtration are often used in these processes. It is desirable that membranes for nano-filtration and ultra-filtration exhibit one or more of the following propertes: mechanical stability, dimensional stability, flow rate suitable for commercial use, low contaminants, etc. Improvements in any or all of these areas are desirable.

SUMMARY

A dry-process microporous membrane for use in filtration is described herein. In some embodiments, at least one layer of the membrane has an average pore size less than 0.035 microns and a thickness less than 14 microns. The average pore size of the single layer, in some embodiments, may be less than 0.03 microns, less than 0.025 microns, or less than 0.020 microns. In some preferred embodiments, the average pore size may be from about 0.010 to about 0.020 microns. In some preferred embodiments, the average pore size may be from about 0.010 to about 0.020 microns. In some embodiments, the average pore size of at least one layer may be less than 0.035 microns and the thickness of the layer may be less than 12 microns. The average pore size of the single layer, in some embodiments, may be less than 0.03 microns, less than 0.025 microns, or less than 0.020 microns. In some preferred embodiments, the average pore size may be from about 0.010 to about 0.020 microns. In some embodiments, the average pore size of at least one layer may be less than 0.035 microns and the thickness of the layer may be less than 10 microns. The average pore size of the single layer, in some embodiments, may be less than 0.03 microns, less than 0.025 microns, or less than 0.020 microns. In some preferred embodiments, the average pore size may be from about 0.010 to about 0.020 microns.

In some embodiments described herein above, the at least one layer may be a polypropylene-containing layer.

In some embodiments described above, the membrane may be a monolayer membrane, a bilayer membrane, a tri-layer membrane, or a multi-layer membrane. The bi-layer, tri-layer, or multi-layer membranes may be formed by laminating two or more layers, co-extruding two or more layers, or a combination of lamination and extrusion steps.

In some of the embodiments described above, the membrane may be a tri-layer membrane comprising a polypropylene-containing layer, a polyethylene-containing layer, and a polypropylene-containing layer in that order. In some embodiments described above, the membrane may be a tri-layer membrane comprising a polyethylene-containing layer, a polypropylene-containing layer, and a polyethylene-containing layer.

In some embodiments described hereinabove, the thickness of the membrane is less than 14 microns, less than 12 microns, or less than 10 microns.

In some embodiments, the membrane is translucent or transparent. In some embodiments, the membrane may have a blue tint and be translucent or transparent.

In some embodiments described hereinabove, shrinkage of the membrane at 90°C for 1 hour is less than 25%, less than 20%, less than 15%, less than 10%, or less than 5%.

In some embodiments described hereinabove, the membrane has a flow time from 400 to 40,000 seconds. Flow time may be measured using isopropyl alcohol (IPA), wherein the flow time is the time to flow 500 ml of isopropyl alcohol at a temperature of 21°C and a pressure of 0.1 MPa through a 47 mm disc of the membrane having an area of 12.5 cm$^2$.

In some embodiments, the membrane may have a hydrophilic treatment or coating on at least one side thereof. This may help with filtration where water or alcohol are used as the solvents.

In another aspect, an ultra-filtration or a nano-filtration process is described. One step of the process is filtering a solvent through the membrane described hereinabove.

In another element, a filtration element is described which comprises a membrane as described hereinabove and a housing.

DESCRIPTION OF THE DRAWINGS

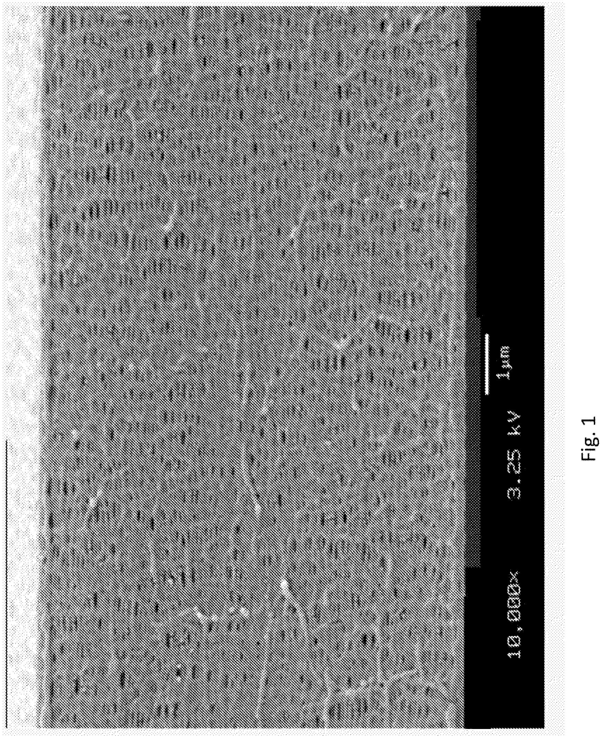

Fig. 1 is an SEM of a dry-process microporous membrane as described herein.

DESCRIPTION

The subject matter of aspects of the present disclosure is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" can be used herein to connote different elements of methods employed, the terms should not be interpreted as implying any particular order among or between various steps disclosed herein unless and except when the order of individual steps is explicitly described.

Accordingly, embodiments described herein can be understood more readily by reference to the following detailed description, examples, and figures. Elements, apparatus, and methods described herein, however, are not limited to the specific embodiments presented in the detailed description, examples, and figures. It should be recognized that the exemplary embodiments herein are merely illustrative of the principles of the invention. Numerous modifications and adaptations will be readily apparent to those of skill in the art without departing from the spirit and scope of the invention.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, or 4.7 to 10.0, or 3.6 to 7.9.

All ranges disclosed herein are also to be considered to include the end points of the range, unless expressly stated otherwise. For example, a range of "between 5 and 10" or "5 to 10" or "5-10" should generally be considered to include the end points 5 and 10.

Further, when the phrase "up to" is used in connection with an amount or quantity; it is to be understood that the amount is at least a detectable amount or quantity. For example, a material present in an amount "up to" a specified amount can be present from a detectable amount and up to and including the specified amount.

Additionally, in any disclosed embodiment, the terms "substantially," "approximately," and "about" may be substituted with "within [a percentage] of" what is specified, where the percentage includes 0.1, 1, 5, and 10 percent.

A dry-process microporous membrane for use in filtration is described herein. In some embodiments, at least one layer of the membrane has an average pore size less than 0.035 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.030 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.025 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.020 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.015 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.010 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some embodiments, at least one layer of the membrane has an average pore size less than 0.005 microns and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns. In some preferred embodiments, at least one layer of the membrane has an average pore size from about 0.010 to about 0.020 microns, and a thickness less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 microns.

In some embodiments described herein above, the at least one layer may be a polypropylene-containing layer. The polypropylene-containing layer may be a layer that comprises, consists of, or consists essentially or polypropylene homopolymer, co-polymer, or combination thereof. The polypropylene -containing layer may comprise, consist of, or consist essentially of 50% or more of polypropylene homopolymer, co-polymer, or combination thereof.

In some embodiments described above, the membrane may be a monolayer membrane, a bilayer membrane, a tri-layer membrane, or a multi-layer membrane. A multi-layer membrane may have four or more layers. The bi-layer, tri-layer, or multi-layer membranes may be formed by laminating two or more layers, co-extruding two or more layers, or a combination of lamination and extrusion steps.

In some embodiments, the membrane may have a total thickness of less than 20 microns, less than 19 microns, less than 18 microns, less than 17 microns, less than 16 microns, less than 15 microns, less than 14 microns, less than 13 microns, less than 12 microns, less than 11 microns, less than 10 microns, less than 9 microns, less than 8 microns, less than 7 microns, less than 6 microns, less than 5 microns, less than 4 microns, less than 3 microns, less than 2 microns, or less than 1 micron.

For example, in one embodiment, the membrane may be a monolayer membrane where the at least one layer of the membrane has an average pore size less than 0.035(preferably between 0.010 and 0.020 microns) has a thickness of 7 microns, and the total membrane thickness is 7 microns. The membrane may be a bilayer where the at least one layer of the membrane has an average pore size less than 0.035 (preferably between about 0.010 and 0.020 microns)has a thickness of 4 microns and the total membrane thickness is 8 microns.

In some of the embodiments described above, the membrane may be a tri-layer membrane comprising a polypropylene-containing layer, a polyethylene-containing layer, and a polypropylene-containing layer in that order. In some embodiments described above, the membrane may be a tri-layer membrane comprising a polyethylene-containing layer, a polypropylene-containing layer, and a polyethylene-containing layer. The polyethylene-containing layer may be a layer that comprises, consists of, or consists essentially or polyethylene homopolymer, co-polymer, or combination thereof. The polyethylene -containing layer may comprise, consist of, or consist essentially of 50% or more of polyethylene homopolymer, co-polymer, or combination thereof.

A dry-process membrane, as understood by one of ordinary skill in the art, is a membrane formed without the use of solvents or oils to form pores. In some embodiments, membranes formed by using particulate pore formers may also be excluded from dry-process membranes. Such membranes may include beta-nucleated biaxially oriented polypropylene (BNBOPP) membranes. Dry-process membranes have a distinct uniform pore structure recognizable by those skilled in the art. See, for example, Fig. 1, which shows a uniaxially stretched dry-process membrane. As can be seen from Fig. 1, dry-process films have elongated or slit-shaped pores. Pores of a biaxially-stretched dry-process membrane may be too large for use in ultrafiltration or nano-filtration applications.

In some embodiments described hereinabove, shrinkage of the membrane at 90°C for 1 hour is less than 25%, less than, less than 20%, less than 15%, less than 10%, or less than 5%, less than 4%, less than 3%, less than 2%, or less than 1%. Low shrinkage is indicative of high dimensional stability, which is crucial. Shrinkage of the membrane in filtering application or during assembly of a filter may cause the membrane to rip, tear or modify other properties such that performance is no longer sufficient and/or predictable. Shrinkage is measured by measuring the membrane (L1), placing the membrane in a 90°C oven for one hour unrestrained, measuring the membrane after being in the oven (L2), and calculating shrinkage using the following formula 1.

$$(L1-L2/L1) \times 100 \quad (1)$$

The flow time using IPA may be at or above 400 seconds, in the range of from about 400 seconds to about 40,000 seconds, 500 seconds to about 40,000 seconds, 600 seconds to about 40,000 seconds, 700 seconds to about 40,000 seconds, 800 seconds to about 40,000 seconds, 900 seconds to about 40,000 seconds, 1,000 seconds to about 40,000 seconds, 2,000 seconds to about 40,000 seconds, 3,000 seconds to about 40,000 seconds, 4,000 seconds to about 40,000 seconds, 5,000 seconds to about 40,000 seconds, 6,000 seconds to about 40,000 seconds, 7,000 seconds to about 40,000 seconds, 8,000 seconds to about 40,000 seconds, 9,000 seconds to about 40,000 seconds, 10,000 seconds to about 40,000 seconds, in the range from about 11,000 seconds to about 40,000 seconds, 17,000 seconds to about 40,000 seconds, 20,000 seconds to about 40,000 seconds, 25,000 seconds to about 40,000 seconds, 30,000 seconds to about 40,000 seconds, or 35,000 seconds to about 40,000 seconds. Flow time may be flow time using IPA (isopropyl alcohol), wherein the flow time is the time to flow 500 ml of isopropyl alcohol (IPA) at a temperature of 21°C and a pressure of 0.1 MPa through a 47 mm disc of the membrane having an area of 12.5 cm$^2$.

EXAMPLES

**Example 1** is a dry-process monolayer polypropylene-containing membrane having a total thickness of 7 microns

**Example 2** is a dry-process tri-layer membrane comprising three polypropylene-containing layers with a total thickness of 6 microns. The polypropylene-containing layer with the smallest pore size is approximately 2 microns in thickness with a pore size of 22 nm.

**Example 3** is a dry-process membrane with a pore size of 20 nm.

**Comparative Example 1** is a dry-process monolayer polypropylene-containing membrane having a total thickness of 7 microns.

**Comparative Example 2** is a dry-process tri-layer membrane comprising a polypropylene-containing layer, a polyethylene-containing layer, and a polypropylene-containing layer in that order. The total thickness of the membrane is 20 microns, with the PP-containing layer thicknesses adding up to 14 microns. PP average pore size is 35 nm.

| Property | Unit s | Example 1 | Example 2 | Example 3 | Comparati ve 1 | Comparati ve 2 |
|---|---|---|---|---|---|---|
| Basis Weight | g/m $^2$ | 3.6 | 3.1 | <5 | 3.3 | 3.5 |
| MD Shrinkage, 90°C | % | 3 | 4 | <5 | 17 | 1 |
| Thickness | μm | 7 | 6 | Less than 10 | 7 | 7 |
| Limiting Layer Pore Size | nm | 23 | 22 | Between 10 nm and 20nm | 23 | 40 |

**Comparative Example 2** has the issue of the pores being too big for nan-filtration or ultra-filtration processes. **Comparative Example 1** has a high shrinkage, which makes it unsuitable for use due to low dimensional stability. Shrinkage of the membrane in application or during assembly may cause the membrane to rip, tear or modify other properties such that performance is no longer sufficient and/or predictable. Examples 1 and 2 have high dimensional stability (e.g., low shrinkage), and small enough pores for use in nano-filtration or ultra-filtration processes (including filtration of gas or liquid).

The following clauses define particular aspects and embodiments of the invention:

Clause 1. A dry-process microporous membrane for filtration, wherein at least one layer of the membrane has an average pore size less than 0.035 microns and a thickness less than 14 microns.

Clause 2. The dry-process microporous membrane of clause 1, wherein the average pore size is less than 0.030 microns.

Clause 3. The dry-process microporous membrane of clause 1, wherein the average pore size is less than 0.025 microns.

Clause 4. The dry-process microporous membrane of clause 1, wherein the average pore size is less than 0.020 microns.

Clause 5. The dry-process microporous membrane of clause 1, wherein the average pore size is from 10 nm to 20 nm.

Clause 6. The dry-process microporous membrane of clause 1, having a thickness less than 12 microns.

Clause 7. The dry-process microporous membrane of clause 6, wherein the average pore size is less than 0.030 microns.

Clause 8. The dry-process microporous membrane of clause 6, wherein the average pore size is less than 0.025 microns.

Clause 9. The dry-process microporous membrane of clause 6, wherein the average pore size is less than 0.020 microns.

Clause 10. The dry-process microporous membrane of clause 6, wherein the average pore size is between 10 nm and 20 nm.

Clause 11. The dry-process microporous membrane of clause 1, having a thickness less than 10 microns.

Clause 12. The dry-process microporous membrane of clause 11, wherein the average pore size is less than 0.030 microns.

Clause 13. The dry-process microporous membrane of clause 11, wherein the average pore size is less than 0.025 microns.

Clause 14. The dry-process microporous membrane of clause 11, wherein the average pore size is less than 0.020 microns.

Clause 15. The dry-process microporous membrane of clause 11, wherein the average pore size from 10 nm to 20 nm.

Clause 16. The dry-process microporous membrane of clause 1, wherein the at least one layer is a polypropylene-containing layer.

Clause 17. The dry-process microporous membrane of clause 6, wherein the at least one layer is a polypropylene-containing layer.

Clause 18. The dry-process microporous membrane of clause 11, wherein the at least one layer is a polypropylene-containing layer.

Clause 19. The dry-process microporous membrane of clause 1, wherein the membrane is a monolayer membrane.

Clause 20. The dry-process microporous membrane of clause 6, wherein the membrane is a monolayer membrane.

Clause 21. The dry-process microporous membrane of clause 11, wherein the membrane is a monolayer membrane.

Clause 22. The dry-process microporous membrane of clause 1, wherein the membrane is a bilayer membrane.

Clause 23. The dry-process microporous membrane of clause 6, wherein the membrane is a bilayer membrane.

Clause 24. The dry-process microporous membrane of clause 11, wherein the membrane is a bilayer membrane.

Clause 25. The dry-process microporous membrane of clause 1, wherein the membrane is a tri-layer or multi-layer membrane.

Clause 26. The dry-process microporous membrane of clause 6, wherein the membrane is tri-layer or multi-layer membrane.

Clause 27. The dry-process microporous membrane of clause 11, wherein the membrane is a tri-layer or multi-layer membrane.

Clause 28. The dry-process microporous membrane of clause 25, wherein the membrane is a tri-layer having a polypropylene-containing layer, a polyethylene-containing layer, and a polypropylene-containing layer in that order.

Clause 29. The dry-process microporous membrane of clause 26, wherein the membrane is a tri-layer having a polypropylene-containing layer, a polyethylene-containing layer, and a polypropylene-containing layer in that order.

Clause 30. The dry-process microporous membrane of clause 27, wherein the membrane is a tri-layer having a polypropylene-containing layer, a polyethylene-containing layer, and a polypropylene-containing layer in that order.

Clause 31. The dry-process microporous membrane of clause 25, wherein the membrane is a tri-layer having a polyethylene-containing layer, a polypropylene-containing layer, and a polyethylene-containing layer in that order.

Clause 32. The dry-process microporous membrane of clause 26, wherein the membrane is a tri-layer having a polyethylene-containing layer, a polypropylene-containing layer, and a polyethylene-containing layer in that order.

Clause 33. The dry-process microporous membrane of clause 27, wherein the membrane is a tri-layer having a polyethylene-containing layer, a polypropylene-containing layer, and a polyethylene-containing layer in that order.

Clause 34. The dry-process microporous membrane of clause 25, wherein the membrane has a total thickness less than 14 microns, less than 12 microns, or less than 10 microns.

Clause 35. The dry-process microporous membrane of clause 28, wherein the membrane has a total thickness less than 14 microns, less than 12 microns, or less than 10 microns.

Clause 36. The dry-process microporous membrane of clause 1, wherein shrinkage at 90°C for 1 hour is less than 25%, less than 20%, less than 15%, less than 10%, or less than 5%.

Clause 37. The dry-process microporous membrane of clause 6, wherein shrinkage at 90°C for 1 hour is less than 25%, less than 20%, less than 15%, less than 10%, or less than 5%.

Clause 38. The dry-process microporous membrane of clause 11, wherein shrinkage at 90°C for 1 hour is less than 25%, less than 20%, less than 15%, less than 10%, or less than 5%.

Clause 39. The dry-process microporous membrane of clause 1, having a flow time using IPA from 400 to 40,000 seconds.

Clause 40. The dry-process microporous membrane of clause 6, having a flow time using IPA from 400 to 40,000 seconds.

Clause 41. The dry-process microporous membrane of clause 11, having a flow time using IPA from 400 to 40,000 seconds.

Clause 42. The dry-process microporous membrane of clause 1, having a flow time using IPA from 11,000 to 40,000 seconds.

Clause 43. The dry-process microporous membrane of clause 6, having a flow time using IPA from 11,000 to 40,000 seconds.

Clause 44. The dry-process microporous membrane of clause 11, having a flow time using IPA from 11,000 to 40,000 seconds.

Clause 45. The dry-process microporous membrane of clause 1, wherein the membrane is transparent or translucent.

Clause 46. The dry-process microporous membrane of clause 6, wherein the membrane is transparent or translucent.

Clause 47. The dry-process microporous membrane of clause 11, wherein the membrane is transparent or translucent.

Clause 48. The dry-process microporous membrane of clause 1, comprising a hydrophilic treatment or coating on at least one side thereof.

Clause 49. The dry-process microporous membrane of clause 6, comprising a hydrophilic treatment or coating on at least one side thereof.

Clause 50. The dry-process microporous membrane of clause 11, comprising a hydrophilic treatment or coating on at least one side thereof.

Clause 51. An ultrafiltration process or a nano-filtration process comprising, filtering a solvent through the membrane of clause 1.

Clause 52. The process of clause 51, wherein the solvent is an aqueous solvent, an alcohol, or an organic solvent.

Clause 53. A filtration element comprising the dry-process membrane of clause 1 and a housing.

**Claims**

1. A filtration element comprising:

   a dry-process microporous membrane for filtration, wherein at least one layer of the membrane has an average pore size less than 0.035 microns and a thickness less than 14 microns; and
   a housing.

2. The filtration element of claim 1, which is adapted to filter solvent for use in microelectronics processing.

3. The filtration element of claim 1 or 2, wherein the average pore size is less than 0.030 microns, less than 0.025 microns, or less than 0.020 microns.

4. The filtration element of any of the preceding claims, wherein the average pore size is from 0.010 microns to 0.020 microns.

5. The filtration element of any of the preceding claims, wherein the at least one layer has a thickness less than 12 microns, or less than 10 microns.

6. The filtration element of any of the preceding claims, wherein the at least one layer is a polypropylene-containing layer.

7. The filtration element of any of the preceding claims, wherein the dry-process microporous membrane is a monolayer membrane, a bilayer membrane, tri-layer membrane, or multi-layer membrane.

8. The filtration element of claim 7, wherein the dry-process microporous membrane is a tri-layer membrane having a polypropylene-containing layer, a polyethylene-containing layer, and a polypropylene-containing layer in that order.

9. The filtration element of any of the preceding claims, wherein the dry-process microporous membrane has a total thickness less than 20 microns, less than 19 microns, less than 18 microns, less than 17 microns, less than 16 microns, less than 15 microns, less than 14 microns, less than 12 microns, or less than 10 microns.

10. The filtration element of any of the preceding claims, wherein the dry-process microporous membrane has a flow time using IPA from 400 to 40,000 seconds.

11. The filtration element of any of the preceding claims, wherein the dry-process microporous membrane comprises a hydrophilic treatment or coating on at least one side thereof.

12. An ultrafiltration process or a nano-filtration process comprising filtering a solvent through a dry-process microporous membrane as defined in any of claims 1-11.

13. The process of claim 12, wherein the process is a process of filtering solvent used for microelectronics processing.

14. The process of claim 13, wherein the process is a nanofiltration process for filtering a solvent used for microelectronics processing, or wherein the process is an ultrafiltration process for filtering solvent used for microelectronics processing.

15. The process of any of claims 12-14, wherein the solvent is an aqueous solvent, an alcohol, or an organic solvent.

Fig. 1